# EUROPEAN PATENT SPECIFICATION

(11) **EP 2 949 481 B1**
(45) Date of publication and mention of the grant of the patent: **01.08.2018**
(21) Application number: 13872557.7
(22) Date of filing: 28.02.2013
(51) Int. Cl.: B60C 7/10, B60C 7/22

(54) **HOLLOWED NON-PNEUMATIC TYRE WITH REINFORCING RIBS**
HOHLER NICHTPNEUMATISCHER REIFEN MIT VERSTÄRKUNGSRIPPEN
PNEU NON PNEUMATIQUE CREUX DOTÉ DE NERVURES DE RENFORCEMENT

(30) Priority: 23.01.2013 CN 201310024292
(43) Date of publication of application: 02.12.2015
(73) Proprietor: Guangzhou Naidong Information Technology Co. Ltd., Guangzhou, Guangdong 510000 (CN)
(72) Inventor: ZHANG, Chunru, Guangzhou Guangdong 510620 (CN)
(74) Representative: 2K Patentanwälte Blasberg Kewitz & Reichel
(86) International application number: PCT/CN2013/000201
(87) International publication number: WO 2014/113904

(56) References cited:
- EP-A2- 2 428 369
- WO-A1-99/55541
- WO-A2-2011/049407
- WO-A2-2011/049407
- CN-A- 102 632 769
- CN-U- 203 046 757
- JP-A- H10 236 217
- JP-A- H10 236 217
- JP-B1- 3 952 211

## Description

### Field of the Invention

The present invention relates to an automobile tire, in particular to a non-pneumatic tire for vehicles, such as bicycles, motorcycles, automobiles and the like.

### Background of the Invention

At present, the existing non-pneumatic tires are implemented by adopting different methods such as filling elastic soft objects in the tires, adding reinforcing ribs in the tires and arranging through holes in the tires. For example, a non-pneumatic tire which is disclosed by the invention with the patent number CN 101284482 A in China implements a shock absorbing function mainly through a reinforced ring belt and a plurality of connecting spokes which are connected together; the non-pneumatic tire with this structure has the disadvantages that the tire is complex to manufacture, the cost is high and the quality is difficult to guarantee.

As another example, a non-pneumatic tire with an arch-shaped cavity, which is disclosed by the invention with the patent number CN 101474942 A in China, implements a shock absorbing function mainly through an S-shaped chamber in the tire and a positioning arch bridge which is connected with the S-shaped chamber; the non-pneumatic tire with this structure has the disadvantage that the tire is difficult to install, use and popularize.

EP 2428369A2 relates to an airless tire which absorbs shock and holds pressure applied to the tire through an auxetic spoke buffer without using air pressure. The airless tire includes a cylindrical tread being in contact with the ground, an axle fixing section having a smaller circumference than the tread and disposed inside the tread, and an auxetic spoke buffer connecting the tread and the axle fixing section and providing a buffering function. Accordingly, the airless tire is transformed only to an extent to properly function as a tire when the spoke buffer is transformed by pressure or impact and fully returns to an original shape when pressure or impact is removed.

JP 3952211B1 relates to a non-pneumatic tire enhancing durability in the tire in which a through hole is formed on a tread. A plurality of through holes are formed in a tire circumferential direction of an annular tread buried with belt layers comprising a steel cord, the belt layers are arranged so as to be left from the through holes in a tire width direction, and a reinforcement layer comprising a resin cord extending in the tire width direction is arranged separately from the belt layers.

WO 2011049407A2 relates to a non-pneumatic tire which rotates on a rotary axis, comprising: an annular member of an elastic material formed at a uniform, predetermined distance from the axis of rotation to form the body of the tire; aperture through holes formed on both lateral sides of the tire body; and elastic columns formed in the radial direction of said holes.

The afore-mentioned prior fails to disclose the distinguishing features in the characterizing part of claim 1.

### Summary of the Invention

It is an object of the present invention to provide an enhanced non-pneumatic tire which has a simple structure, is convenient to install and has good shock absorbing performance, particularly aiming at overcoming the disadvantages of the existing non-pneumatic tires as outlined above.

This problem is solved by a non-pneumatic tire as claimed by claim 1. Further advantageous embodiments are the subject-matter of the dependent claims.

A hollowed-out or partially holed non-pneumatic tire with reinforcing ribs according to the present invention comprises a tire body. A row of through holes or rows of through holes are uniformly and annularly distributed in the tire body. The through holes are uniformly distributed in the tire body in 360 degrees taking the central axis of the tire body as a center. The through holes transversely penetrate through the two sides of the tire body. The reinforcing ribs are arranged in the through holes. The through holes consist of an inner row of holes and an outer row of holes. Each hole of the inner row of holes is arranged at a corresponding position between every two holes of the outer row of holes to form an inverted-triangle structure. The reinforcing ribs in the inner row of holes and the outer row of holes are distributed at a consistent angle and in opposite directions.

According to a further embodiment the reinforcing ribs are elastic pieces which are connected with the two sides of the through holes.

According to a further embodiment the reinforcing ribs are arranged at the positions of the middle sections of the through holes.

According to a further embodiment the length of the reinforcing ribs is equal to the length of the through holes.

### Beneficial Effects of the Invention

Since the reinforcing ribs are arranged in the through holes of the hollowed-out (partially holed) non-pneumatic tire, the tire body is enabled to have a higher elasticity. Furthermore, the friction area between the tire and the ground is reduced and the driving force of vehicles such as bicycles, motorcycles and automobiles or the like is effectively decreased.

### Brief Description of Accompanying Drawings

- Fig. 1: is a front view of embodiment I according to the present invention.
- Fig. 2: is a sectional view along A-A of Fig. 1.
- Fig. 3: is a top view of Fig. 1.
- Fig. 4: is an enlarged schematic view of part B of Fig. 1.
- Fig. 5: is an enlarged schematic view of part C of Fig. 2.
- Fig. 6: is a structural schematic drawing of embodiment II according to the present invention.
- Fig. 7: is a front view of the embodiment III, which is not covered by the present invention, but is included for better understanding the embodiment of the present invention.
- Fig. 8: is an enlarged schematic view of part D of Fig. 7 for better understanding the embodiment of the present invention.
- Fig. 9: is a front view of the embodiment IV, which is not covered by the present invention, but is included for better understanding the embodiment of the present invention.
- Fig. 10: is an enlarged schematic view of part D of Fig. 9.
- Fig. 11: is another structural schematic drawing of Fig. 10.

### Detailed Description of preferred Embodiments

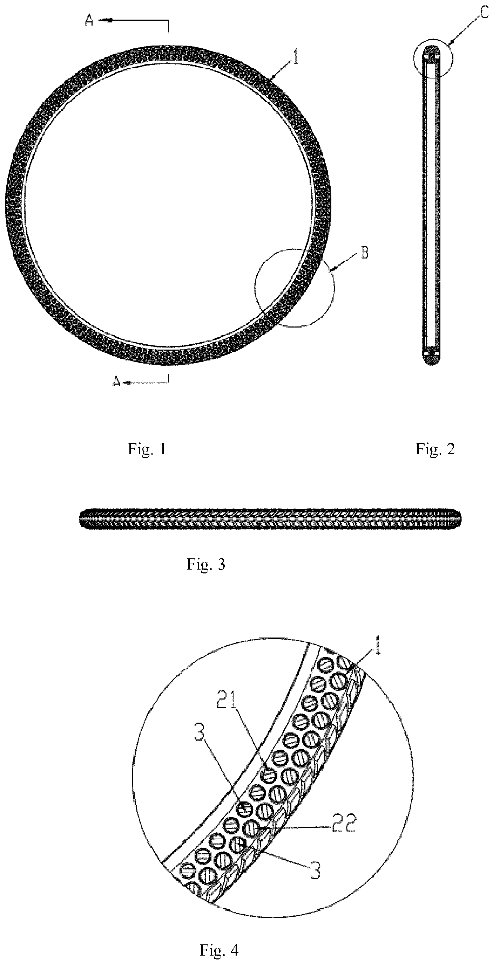

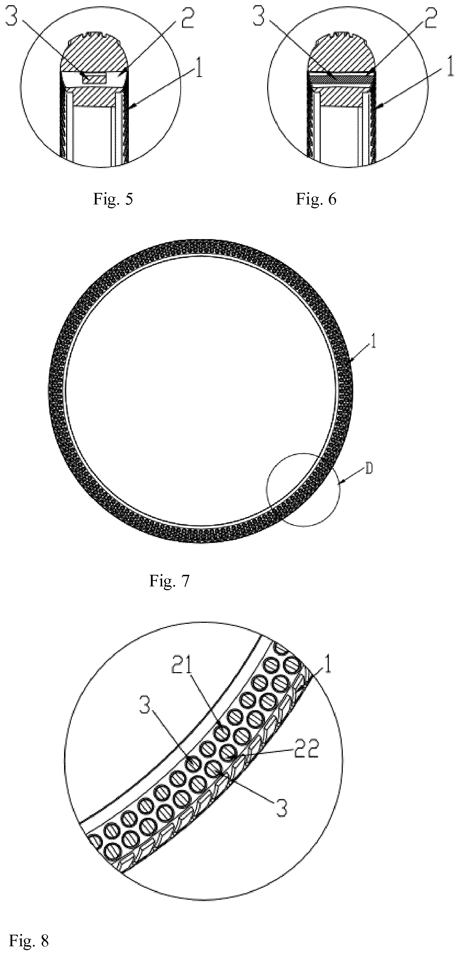

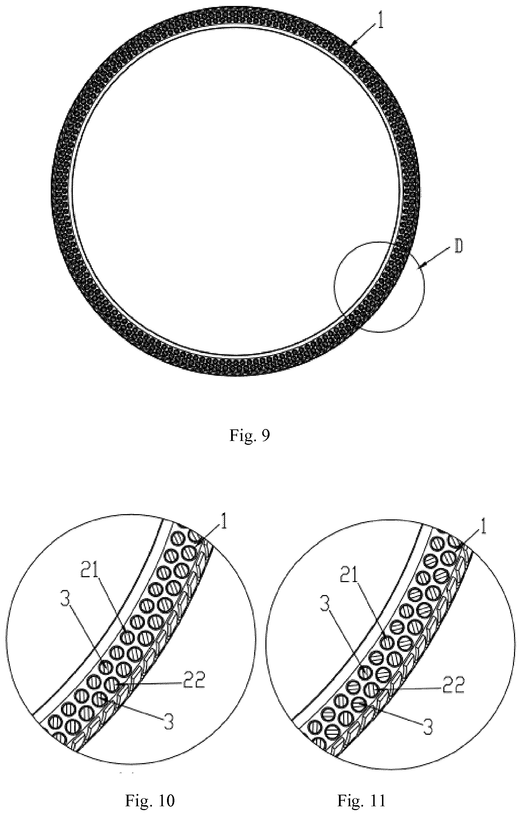

Embodiment I: as shown in Figs. 1 to 5, the hollowed-out (partially holed) non-pneumatic tire with reinforcing ribs according to embodiment I of the present invention comprises a tire body 1; a row or rows of holes 2 are uniformly and annularly distributed in the tire body 1. The through holes 2 are uniformly distributed in the tire body by 360 degrees taking the central axis of the tire body 1 as a center. The through holes 2 are arranged along an inner row of holes 21 and an outer row of holes 22; each hole of the inner row of holes 21 is arranged at a corresponding position between two adjacent holes of the outer row of holes 22 to form an inverted-triangle structure. The through holes 2 transversely penetrate through the two sides of the tire body 1. The reinforcing ribs 3 are arranged in the through holes 2; the reinforcing ribs 3 in the inner row of holes 21 and in the outer row of holes 22 are distributed at a consistent angle and in opposite directions.
   As shown by Fig. 4, the reinforcing ribs 3 in the inner row of holes 21 are arranged at approximate plus 45 degrees relative to the diameter of the tire body 1 and the reinforcing ribs 3 in the outer row of holes 22 are arranged at approximate minus 45 degrees relative to the diameter of the tire body 1, so that when the tire rotates, the reinforcing ribs 3 are close to the rotating direction of the tire body 1, the elasticity and the strength of the tire are effectively reinforced, the contact between the tire body 1 and the ground is reduced, the friction is decreased and the driving force is decreased. The reinforcing ribs 3 are elastic pieces which are connected with the two sides of the through holes 2, or can be rubber blocks which are integrally molded with the tire body 1; the reinforcing ribs 3 are arranged at the positions of the middle sections of the through holes 2, i.e., the reinforcing ribs 3 are elastic pieces which are arranged at the middle sections in the through holes 2, as shown by Fig. 5.
Embodiment II: as shown in Fig. 6, the hollowed-out (partially holed) non-pneumatic tire with the reinforcing ribs of embodiment II of the present invention is characterized in that the length of the reinforcing ribs 3 in the through holes 2 in the tire body 1 is equal to the length of the through holes 2, i.e., the reinforcing ribs 3 are elastic pieces which penetrate through the through holes 2 and have length being equal to the length of the through holes 2, and other arrangements are the same as that in the embodiment I outlined above.
Embodiment III, which is not covered by the present invention, but is included for better understanding the present invention: as shown in Figs. 7 and 8, the hollowed-out non-pneumatic tire with the reinforcing ribs of embodiment III is characterized in that the reinforcing ribs 3 in the tire body 1 are arranged in the through holes 2 and are in parallel with the diameter of the tire body; other arrangements are as same as that in the embodiment I outlined above.
Embodiment IV, which is not covered by the present invention, but is included for better understanding the present invention: as shown in Figs. 9 and 10, the hollowed-out non-pneumatic tire with the reinforcing ribs of embodiment IV is characterized in that the reinforcing ribs 3 in the inner row of holes 21 and the outer row of holes 22 in the tire body 1 are distributed at a consistent angle and in the same direction. Similarly, as shown in Fig. 11, the reinforcing ribs 3 in the inner row of holes 21 and the outer row of holes 22 are distributed at same spacing angles and in opposite directions; other arrangements are as same as that in the embodiment I outlined above.

## Claims

1. A hollowed-out non-pneumatic tire with reinforcing ribs, comprising a tire body (1), a row of through holes (2) or multiple rows of through holes (2) which are uniformly and annularly distributed in the tire body (1), wherein
the through holes (2) are uniformly distributed in the tire body (1) in 360 degrees taking a central axis of the tire body (1) as a center, and
the through holes (2) are configured to transversely penetrate through two sides of the tire body (1),
the reinforcing ribs (3) are arranged in the through holes (2),
**characterized in that** the through holes (2) consist of an inner row of holes (21) and an outer row of holes (22),
each hole of the inner row of holes (21) is arranged at a corresponding position between two neighboring holes of the outer row of holes (22) to form an inverted-triangle structure, and
the reinforcing ribs (3) in the inner row of holes (21) and the outer row of holes (22) are distributed at a consistent angle and in opposite directions.

2. The hollowed-out non-pneumatic tire with reinforcing ribs according to claim 1, wherein the reinforcing ribs (3) are elastic pieces which are connected with the two sides of the through holes (2).

3. The hollowed-out non-pneumatic tire with reinforcing ribs according to claim 1, wherein the reinforcing ribs (3) are arranged at the positions of middle sections of the through holes (2).

4. The hollowed-out non-pneumatic tire with reinforcing ribs according to claim 1, wherein the length of the reinforcing ribs (3) is equal to the length of the through holes (2).

## Patentansprüche

1. Hohler nichtpneumatischer Reifen mit Verstärkungsrippen, umfassend einen Reifenkörper (1), eine Reihe von Durchgangslöchern (2) oder mehrere Reihen von Durchgangslöchern (2), die gleichmäßig und ringförmig in dem Reifenkörper (1) verteilt sind, wobei
die Durchgangslöcher (2) gleichmäßig in dem Reifenkörper (1) unter 360 Grad verteilt sind, wobei eine Mittelachse des Reifenkörpers (1) als Mittelpunkt genommen wird, und
die Durchgangslöcher (2) so ausgebildet sind, dass diese sich quer durch zwei Seiten des Reifenkörpers (1) hindurch erstrecken,
die Verstärkungsrippen (3) in den Durchgangslöchern (2) angeordnet sind,
**dadurch gekennzeichnet, dass** die Durchgangslöcher (2) aus einer inneren Lochreihe (21) und einer äußeren Lochreihe (22) bestehen, wobei
jedes Loch der inneren Lochreihe (21) an einer entsprechenden Stelle zwischen zwei benachbarten Löchern der äußeren Lochreihe (22) angeordnet ist, um eine invertierte Dreieckstruktur zu bilden, und
die Verstärkungsrippen (3) in der inneren Lochreihe (21) und in der äußeren Lochreihe (22) unter einem gleichmäßigen Winkel und in entgegengesetzten Richtungen verteilt sind.

2. Hohler nichtpneumatischer Reifen mit Verstärkungsrippen nach Anspruch 1, wobei die Verstärkungsrippen (3) elastische Teile sind, die mit den beiden Seiten der Durchgangslöcher (2) verbunden sind.

3. Hohler nichtpneumatischer Reifen mit Verstärkungsrippen nach Anspruch 1, wobei die Verstärkungsrippen (3) an den Positionen von mittleren Abschnitten der Durchgangslöcher (2) angeordnet sind.

4. Hohler nichtpneumatischer Reifen mit Verstärkungsrippen nach Anspruch 1, wobei die Länge der Verstärkungsrippen (3) gleich der Länge der Durchgangslöcher (2) ist.

## Revendications

1. Un pneu non pneumatique évidé doté de nervures de renforcement, comprenant un corps de pneu (1), une rangée de trous traversants (2) ou plusieurs rangées de trous traversants (2) qui sont répartis de manière uniforme et annulaire dans le corps de pneu (1) dans lequel
les trous traversants (2) sont répartis uniformément dans le corps de pneu (1) sur 360 degrés en prenant comme axe un axe central du corps de pneu (1) et
les trous traversants (2) sont configurés pour traverser transversalement deux côtés du corps de pneu (1),
**caractérisé en ce que** les trous traversant (2) consistent en une rangée interne de trous (21) et une rangée externe de trous (22),
chacun des trou de la rangée interne de trous (21) est disposé à une position correspondante entre deux trous voisins de la rangée extérieure de trous (22) pour former une structure en triangle inversé, et
les nervures de renforcement (3) dans la rangée intérieure de trous (21) et la rangée externe de trous (22) sont distribués selon un angle constant et suivant des directions opposées.

2. Le pneu non pneumatique évidé doté de nervures de renforcement selon la revendication 1, dans lequel les nervures de renfort (3) sont des pièces élastiques qui sont reliées aux deux côtés des trous traversants (2).

3. Le pneu non pneumatique évidé doté de nervures de renforcement selon la revendication 1, dans lequel les nervures de renfort (3) sont disposées aux positions des sections médianes des trous traversants (2).

4. Le pneu non pneumatique évidé doté de nervures de renforcement selon la revendication 1, dans lequel la longueur des nervures de renfort (3) est égale à la longueur des trous traversants (2).
